Europäisches Patentamt

European Patent Office

Office européen des brevets

(19)

(11) **EP 1 301 018 A1**

(12) **EUROPEAN PATENT APPLICATION**

(43) Date of publication:
09.04.2003 Bulletin 2003/15

(51) Int Cl.⁷: **H04M 9/08**, H04B 3/23

(21) Application number: **01440332.3**

(22) Date of filing: **02.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ALCATEL**
**75008 Paris (FR)**

(72) Inventor: **Gerlach, Christian, Dr.-Ing.**
**71254 Ditzingen (DE)**

(74) Representative: **Richardt, Markus Albert et al**
**Quermann & Richardt**
**Patentanwälte**
**Unter den Eichen 7**
**D-65195 Wiesbaden (DE)**

(54) **Apparatus and method for modifying a digital signal in the coded domain**

(57)    The present invention relates to a network unit, an internet access device or gateway, a computer program product and a method for modifying a coded digital signal being represented by a set of parameter values of a speech or audio synthesis model. The coded digital signal is modified in the coded domain by modifying at least one of the parameter values. An application is acoustic echo and / or noise reduction of the coded digital signal.

```
┌──────────────────────────────────────────────┐
│      Receiving a coded digital backward signal │ ⟍ 40
│        and a coded digital forward signal      │
└──────────────────────────────────────────────┘
                       │
                       ▼
┌──────────────────────────────────────────────┐
│   Employing an echo and / or noise reduction algorithm │ ⟍ 42
│ on the coded and / or decoded backward and forward signals │
│            to obtain an attenuation factor     │
└──────────────────────────────────────────────┘
                       │
                       ▼
┌──────────────────────────────────────────────┐
│        Reading the scaling parameter value     │ ⟍ 44
│             from the backward signal           │
└──────────────────────────────────────────────┘
                       │
                       ▼
┌──────────────────────────────────────────────┐
│       Modifying the scaling parameter value    │ ⟍ 46
│         by means of the attenuation factor     │
└──────────────────────────────────────────────┘
                       │
                       ▼
┌──────────────────────────────────────────────┐
│   Replacing the scaling parameter value by the modified │ ⟍ 48
│     scaling parameter value in the coded domain │
│              of the backward signal            │
└──────────────────────────────────────────────┘
```

**Fig. 4**

**Description**

A number of attempts have been made in the prior art to reduce echo and / or noise of a coded digital signal for transmission of speech or audio signals over a telecommunication network.

In order to provide a maximum number of speech channels that can be transmitted through a band-limited medium, considerable efforts have been made to reduce the bit rate allocated to each channel. For example, by using a logarithmic quantization scale, such as in .mu.-Law PCM encoding, high quality speech or audio can be encoded and transmitted at 64 kb/s. One variation of such an encoding method, adaptive .mu.-Law PCM (ADPCM) encoding, can reduce the required bit rate to 32 kb/s.

Further advances in speech and audio coding have exploited characteristic properties of speech signals and of human auditory perception in order to reduce the quantity of data that needs to be transmitted in order to acceptably reproduce an input signal at a remote location for perception by a human listener. For example, a voiced speech signal such as a vowel sound is characterized by a highly regular short-term wave form (having a period of about 5 - 10 ms) which changes its shape relatively slowly. Such speech can be viewed as consisting of an excitation signal (i.e., the vibratory action of vocal chords) that is modified by a combination of time varying filters (i.e., the changing shape of the vocal tract and mouth of the speaker). Hence, coding schemes have been developed wherein an encoder transmits data identifying one of several predetermined excitation signals and one or more modifying filter coefficients, rather than a direct digital representation of the speech signal. At the receiving end, a decoder interprets the transmitted data in order to synthesize a speech signal for the remote listener. In general, such speech or audio coding systems are referred to as a parametric coders, since the transmitted data represents a parametric description of the original speech or audio signal.

Parametric or hybrid speech coders can achieve bit rates of approximately 2-16 kb/s, which is a considerable improvement over PCM or ADPCM. In one class of speech coders, code-excited linear predictive (CELP) coders, the parameters describing the speech are established by an analysis-by-synthesis process. In essence, one or more excitation signals are selected from among a finite number of excitation signals; a synthetic speech signal is generated by combining the excitation signals; the synthetic speech is compared to the actual speech; and the selection of excitation signals is iteratively updated on the basis of the comparison to achieve a "best match" to the original speech on a continuous basis. Such coders are also known as stochastic coders or vector-excited speech coders.

One function which needs to be performed on a telecommunication signal is echo cancellation. In an echo canceler, an adaptive transversal filter is provided for estimating the impulse response of an echo path between a received signal and a transmitted signal. The transmitted signal is convolved with the estimated impulse response to provide an estimated echo signal. The estimated echo signal is then subtracted from the received signal to remove the echo component of the originally transmitted signal.

When echo cancellation is performed in conjunction with speech coding, the performance of echo cancellation is impaired by the mismatch, at any given moment, between the encoded transmitted signal and the decoded received echo even if the acoustic impulse response would be known exactly. While PCM-based echo cancelers can achieve an echo return loss enhancement of 30 dB or more, the use of CELP coding can reduce the performance of the canceler to an echo return loss enhancement of about 20 dB or less. One reason for such reduction in performance is that the estimated echo signal is determined as a function of the transmitted signal, which is expressed in terms of the far-end excitation signal selected by the far-end CELP coder. The estimated echo signal is then subtracted from the received signal, which, in turn, is based upon the current near-end excitation signal selected by the near-end CELP coder. Hence, the resulting echo-canceled signal will include a noise component attributable to differences between the near-end and far-end excitation signals and sythesis filter coefficients.

US-A-5, 857, 167 shows a parametric speech codec, such as a CELP, RELP, or VSELP codec, which is integrated with an echo canceler to provide the functions of parametric speech encoding, decoding, and echo cancellation in a single unit. The echo canceler includes a convolution processor or transversal filter that is connected to receive the synthesized parametric components, or codebook basis functions, of respective send and receive signals being decoded and encoded by respective decoding and encoding processors. The convolution processor produces and estimated echo signal for subtraction from the send signal.

US-A- 5, 915, 234 shows a method of CELP coding an input audio signal which begins with the step of classifying the input acoustic signal into a speech period and a noise period frame by frame. A new autocorrelation matrix is computed based on the combination of an autocorrelation matrix of a current noise period frame and an autocorrelation matrix of a previous noise period of frame. LPC analysis is performed with the new autocorrelation matrix. A synthesis filter coefficient is determined based on the result of the LPC analysis, quantized, and then sent. An optimal codebook vector is searched for based on the quantized synthetic filter coefficient.

US-A- 5,953, 381 shows a noise canceler which orthogonally transforms a noise frame by means of an FFT and sorts its transform coefficients into N groups by means of a group by group basic reduction value determining section. Then, it compares the mean value of the transform coefficients of each of the groups with a threshold value and determines a basic reduction value according to the outcome of the comparison. Then, it operates to suppress the transform coefficients produced from the FFT by means of a transform coefficient suppressing section on the basis of the basic reduction value.

Spoken voices are remarkably blurred in environments with a high background noise level including buses and commuter trains. Efforts have been made to develop noise cancelers that eliminate noises and encode only voices. Known papers discussing noise cancelers include "Suppression of Acoustic Noise in Speech Using Subtraction" (IEEE trans., vol. ASSP-27, pp. 113-120, April, 1979).

In the spectrum subtraction method, a discrete Fourier transformation is performed to convert a plurality of input speech signals into a plurality of spectra, and one or more noises are subtracted from the spectra. This method is applied for a broad range of applications, including speech input devices.

US-A- 6, 205, 421 shows a speech coding apparatus, a linear prediction coefficient analysing apparatus and noise reducing apparatus. The noise reducing apparatus uses an inverse Fourier transformation of a noise-reduced input spectrum produced by a noise reducing means according to a phase spectrum. A plurality of frames of digital speech signals are transformed into a plurality of input spectra and a plurality of phase spectra corresponding to the frames for all frequency values by means of the Fourier transformation. A degree of a noise reduction is determined according to each of the frames of digital speech signals.

A common disadvantage of the above cited prior art is that those systems require the original signal and/or the Fourier spectrum for the purposes of noise reduction.

A general overview of code excited linear prediction methods (CELP) and speech synthesis is given in Gerlach, Christian Georg: Beiträge zur Optimalität in der codierten Sprachübertragung, 1. Auflage Aachen: Verlag der Augustinus Buchhandlung, 1996 (Aachener Beiträge zu digitalen Nachrichtensystemen, Band 5), ISBN 3-86073-434-2.

Echo and noise reduction is best done in the terminal where original signals are available. Echo reduction requirements increase with increasing transmission delay. Because of increasingly heterogeneous networks, where the network provider has no influence on the used terminals, echo and noise reduction or cancellation is still necessary in network elements.

Echo and noise reduction methods are known and in operation that use the sampled signals.

Now with the use of Tandem Free Operation (TFO) and Transcoder Free Operation (TrFO) protocols for mobile-to-mobile calls or in Voice over IP systems only coded signals are available in network elements and these bitstreams are transmitted to the final users decoder.

It is therefore an object of the present invention to provide for an improved method for modifying a coded digital signal in particular for the purposes of echo and noise reduction as well as to provide an improved network unit, such as a gateway and internet access device.

In accordance with the present invention a digital signal is modified in the coded domain by modifying at least one of the parameter values provided by a speech and/or audio synthesis model. This compares to the prior art, where modifications of a digital signal are only possible in the domain of the signal samples or in the frequency domain derived from the signal samples.

It is a particular advantage of the present invention that it allows to modify a coded digital signal without a need of a full speech or audio decoding and encoding operation.

Further the present invention can be applied to different parameters of a speech or audio synthesis model such as gains or spectral information in various representations. As such it can be applied to many different speech or audio coding algorithms.

In accordance with a further preferred embodiment of the invention a noise reduction method or an echo cancellation or reduction method is used to obtain an attenuation factor. Such methods are as such known from the prior art, e. g. M. Walker, Elektrisches Nachrichtenwesen, 2. Quartal 1993. This attenuation factor is used to modify a scaling parameter of the speech synthesis model.

Speech synthesis models which provide such a scaling parameter are used in all speech codecs in the GSM systems GSM-FR, GSM-HR, GSM-EFR, GSM-AMR and probably the new wideband GSM-AMR as well as in most CELP codecs for voice over IP systems.

In the following a preferred embodiment of the invention will be described in greater detail by making reference to the drawings in which :

Fig. 1    is a block diagram of an embodiment of a network unit in accordance with the invention,

Fig. 2    is a block diagram depicting the structure of a synthesis filter cascade,

Fig. 3    shows a block diagram of a CELP-structure with "closed loop LTP" by means of an adaptive codebook,

Fig. 4    shows a flowchart of an embodiment in accordance with the invention.

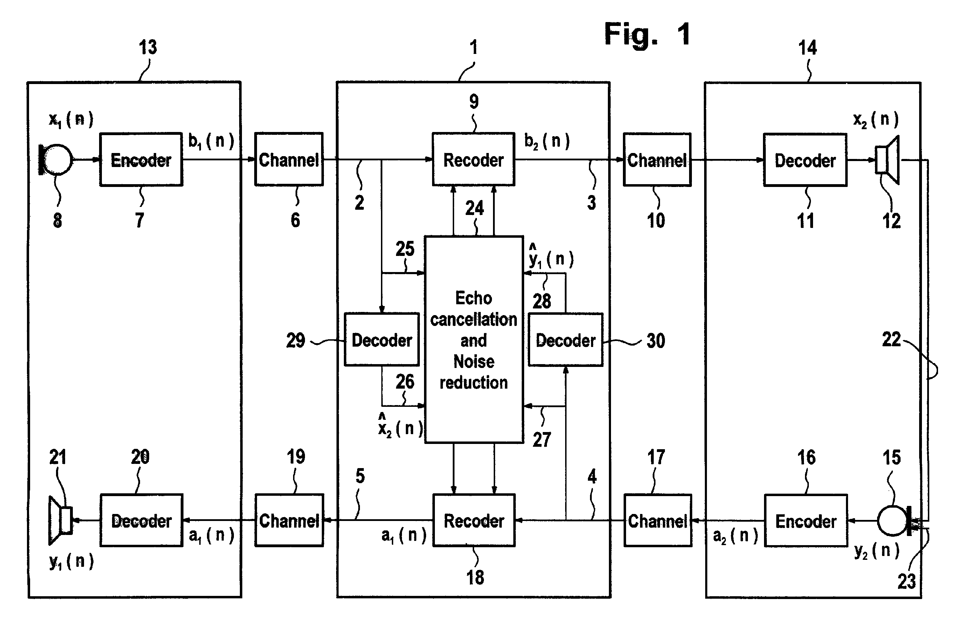

Fig. 1 shows a block diagram of a network unit 1. The network unit 1 can be a gateway or a internet access device for the purposes of voice over IP or it can be a mobile switching center of a mobile digital telecommunication's network or any other kind of network unit.

The network unit 1 has an input 2 and an output 3 as well as an input 4 and an output 5.

The input 2 of the network unit 1 is connected to a data transmission channel 6. The data transmission channel 6 serves to transmit a coded digital speech signal $b_1$ (n) which is outputted by an encoder 7. The encoder 7 receives at its input a sampled digital speech signal $x_1$ (n).

For example, an analogue speech signal is generated by the microphone 8 which is sampled to produce the sampled digital speech signal $x_1$ (n).

The sampled digital speech signal $x_1$ (n) is then inputted into the encoder 7. The encoder 7 performs a coding operation in accordance with a speech synthesis model, such as by means of a code excited linear prediction method.

This way the encoder 7 produces the bit stream of coded digital speech signals $b_1$ (n) which are transmitted over the data transmission channel 6 to the input 2 of the network unit 1.

The coded digital speech signal $b_1$ (n) received at the input 2 of the network unit 1 is inputted into a recoder 9 of the network unit 1. The recoder 9 outputs a recoded bit stream of a digital speech signal $b_2$ (n) which is outputted at the output 3 of the network unit 1. The recoded digital speech signal $b_2$ (n) is transmitted from the output 3 over the data transmission channel 10 to a decoder 11. The decoder 11 transforms the recoded digital speech signal stream $b_2$ (n) into a stream of sampled digital signals $x_2$ (n) which are then converted into the analogue domain and rendered by means of a speaker 12.

For example the microphone 8 and the encoder 7 belong to a mobilephone 13 and the decoder 11 and the speaker 12 belong to a mobile phone 14. Alternatively the speaker 12 forms part of a hands-free-unit, which is connected to the mobile phone 14 to allow hands-free operation of the user of the mobile phone such as for communication in the car.

The mobile phone 14 has a microphone 15 which generates an analogue signal which is sampled to produce the sampled digital speech signal $y_2$ (n). This signal is inputted into the encoder 16 of the mobile phone 14 in order to produce a bit stream of a coded digital speech signal $a_2$ (n). The encoder 16 matches the decoders 20 and 30. The principles of operation of the encoder 16 are equivalent to those of the encoder 7, though the mode in which the encoder 16 operates can be different to that of encoder 7.

The coded digital speech signal $a_2$ (n) is transmitted over the data transmission channel 17 to the input 4 of the network unit 1. From there the received bit stream of coded digital speech signal $a_2$ (n) is inputted into the recoder 18 of the network unit 1.

The recoder 18 produces a recoded digital speech signal $a_1$ (n) which is outputted at the output 5 of the network unit 1 to the data transmission channel 19.

The mobile phone 13 receives the coded digital speech signal $a_1$ (n) from the data transmission channel 19. This signal is inputted into the decoder 20 to produce a sampled digital speech signal $y_1$ (n). This signal is converted into the analogue domain and rendered by a speaker 21 of the mobile phone 13.

It is important to note, that the speaker 12 and the microphone 15 of the mobile phone 14 are coupled by an acoustic feedback path 22. Because of the acoustic feedback path 22 the speech signal $y_2$ (n) contains an echo component of the speech signal $x_2$ (n). In particular the acoustic feedback path 22 can create a strong echo signal component in the case of a hands-free unit.

In addition or alternatively acoustic noise 23 is received by the microphone 15 from background noises which can have a variety of sound sources. Such acoustic noise is a problem in a car hands-free unit because of the many noise sources in a car.

In order to provide a solution for the problems of the acoustic feedback path 22 and the acoustic noise 23 recoding operations are performed in the recoder 18, and in the recoder 9 of the network unit 1 for the feedback path formed between the speaker 21 und the microphone 8. For this purpose the network unit 1 contains an echo cancellation and noise reduction module 24. The module 24 can be implemented based on any prior art echo cancellation and noise reduction method such as the methods known from M. Walker, Elektrisches Nachrichtenwesen, 2. Quartal 1993.

The module 24 has inputs 25, 26 for the forward signal $x_1$(n) and inputs 27 and 28 for the backward signal $y_2$(n).

The input 25 serves to input the coded digital speech signal $b_1$(n) into the module 24. This signal is decoded by the decoder 29 of the network unit 1 in order to provide the sampled digital speech signal $x_2(n)$ which is inputted in to the input 26.

Likewise the module 24 receives the coded digital speech signal $a_2$(n) at its input 27 and the decoded sampled digital speech signal $y_1(n)$ at its input 28 after decoding by the decoder 30 of the network unit 1.

In accordance with an alternative embodiment of the invention the module 24 has only a sub-set of the inputs 25 to 28, for example only inputs 25 and 27 instead of all the inputs 25 to 28. Depending on the kind of input signals provided to the module 24 as a representation of the forward signal $x_1$ (n) and the backward signal $y_2$ (n) the echo cancellation and noise reduction method needs to be adapted correspondingly.

In a preferred embodiment the module 24 provides for an attenuation factor to reduce the signal amplitude or the power of the backward signal $y_2$ (n) at a specific time or time period when echo and / or noise is detected. The module 24 reads the value of a scaling parameter provided by the speech synthesis model of the encoder 16 in the coded digital speech signal represented by the bit stream $a_2$ (n).

In the case of CELP this is the value of the scaling parameter $\gamma_f$. This value of the scaling factor parameter $\gamma_f$ is modified in proportion to the attenuation factor provided by the echo cancellation and noise reduction method. The modified value of the scaling parameter $\gamma_f$ is requantized in order to replace the value of the original scaling parameter value in the backward coded digital speech signal $a_2$ (n). This way the coded digital speech signal $a_1$ (n) is outputted by the recoder 18 whereby the recoded digital speech signal $a_1$ (n) has a reduced echo and / or noise component.

The network unit 1 is particularly advantageous for a GSM system in the TFO or TrFO mode. Further it is to be noted that the expense for the decoders 29 and 30 is minimal in comparison to encoders. This is particularly advantageous in comparison to the prior art as the prior art requires to re-encode the signal after it has been decoded.

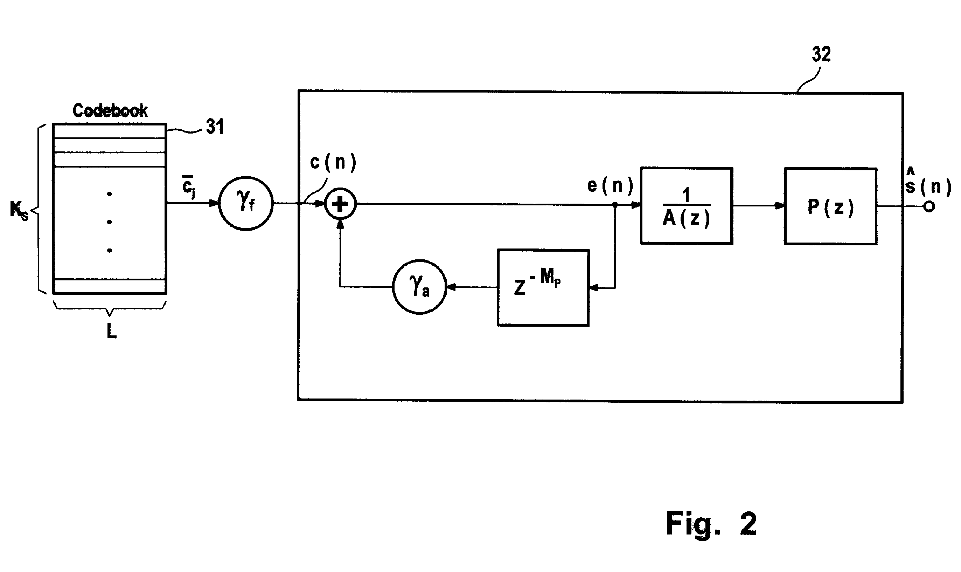

Fig. 2 shows a block diagram of a structure for linear predictive coding. The code book 31 contains a number of $K_S$ code vectors. An excitation signal c(n) is searched as a replacement of a section of the residual signal d(n) having a length L of a sub frame. For this purpose each code sequence is scaled with a scaling parameter $\gamma_f$ and outputted into the synthesis cascade 32.

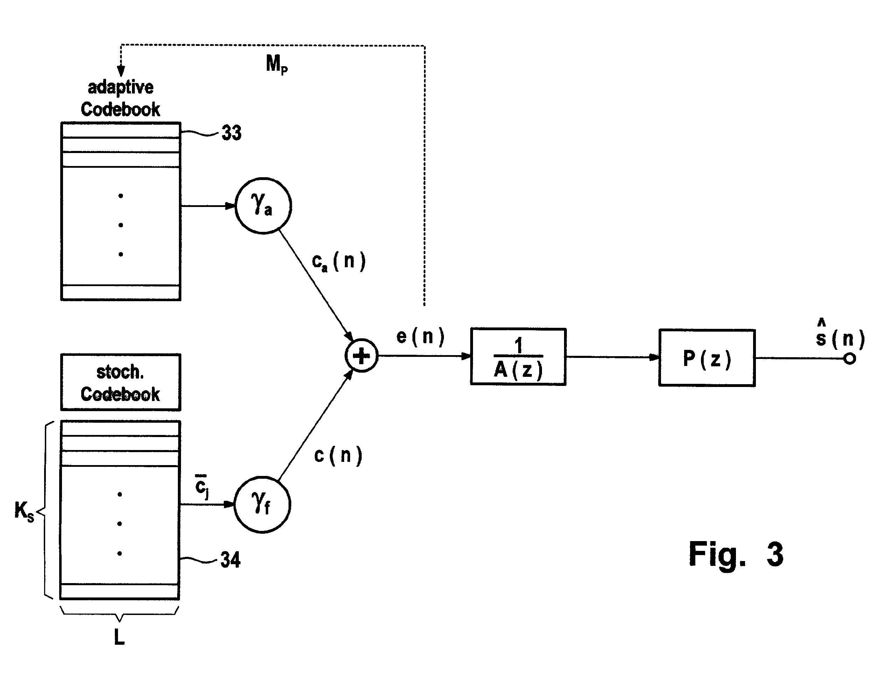

Fig. 3 shows a block diagram of a CELP- structure with "closed loop LTP" by means of an adaptive codebook 33. Further the structure comprises a stochastic codebook 34. The code sequences contained in the adaptive codebook 33 and the stochastic codebook 34 are scaled by means of the values $\gamma_a$ and $\gamma_f$ of the respective scaling parameters.

The structures of Fig. 2 and 3 are as such known from Gerlach, Christian Georg: Beiträge zur Optimalität in der codierten Sprachübertragung, 1. Auflage Aachen: Verlag der Augustinus Buchhandlung, 1996 (Aachener Beiträge zu digitalen Nachrichtensystemen, Band 5), ISBN 3.86073-434-2, chapter 2.3.6 and 2.3.6.2. The corresponding speech synthesis models of RELP and CELP algorithms with a long term synthesis filter and with an adaptive codebook for a long term prediction are used in GSM and ITU-T codecs. Here a short term synthesis filter is excited with an excitation signal e(n). In any case a scale parameter denoted $\gamma_f$ exists in all codecs in which a subframe-wise processing is carried out.

In the following it is shown that modifying the scaling parameter $\gamma_f$ by multiplying it with the attenuation factor $\mu$ results in a corresponding attenuation of the resulting signal:

Now looking at the excitation e(n) of the synthesis filter $1/A$ (z) one can state the following formula:

$$e(n)=\gamma_f \, c_j(n)+\gamma_a \cdot e(n-M_p)$$

where **$c_j(n)$** is the fixed codebook excitation.

If the scale factor $\gamma_f$ is attenuated by replacing it with $\mu\gamma_f$ we get a new excitation signal $e_a$ (n) for which it is

$$e_a(n)=\mu \, \gamma_f \, c_j(n)+\gamma_a \cdot e_a(n-M_p) \hspace{3cm} \text{(Eq. 1)}.$$

In the first sub frame the signal $e_a(n-M_p)$ (the memory) is zero so that **$e_a(n)=\mu e(n)$** holds.

In every following sub frame $e(n-M_p)$ or $e_a(n-M_p)$ is either zero or $e_a(n-M_p)$ is exactly attenuated by $\mu$ because it refers to an already processed sub frame so that **$e_a(n-M_p)=\mu e(n-M_p)$** always holds.

From that we conclude from (Eq. 1) (and by complete induction) that

$$e_a(n)=\mu\gamma_f c_j(n) +\mu\gamma_a \cdot e(n-M_p) \, = \mu e \, (n)$$

is true for every sub frame or every time instance **n.**

The signal **e(n)** is the excitation of a time varying but linear synthesis filters thus for the output i. e. the speech signal we also have

$$\hat{s}_a(n)=\mu \cdot \hat{s}(n)$$

That means by replacing $\gamma_f$ by $\mu\gamma_f$ we can exactly attenuate the output signal by the factor $\mu$ as desired. Hence an echo cancellation or noise reduction algorithm with e. g. a compander or other attenuation algorithm can be implemented by using the decoded time signals as before and producing an attenuation factor $\mu$ for each signal path.

With respect to the example shown in Fig. 1 this means that the bit stream of the coded digital speech signal $b_1$ (n) contains the scale parameter $\gamma_f$ for each sub frame of $b_1$ (n).

Within the network unit 1 it is decoded using a simple quantization table. Then $\gamma_{fnew} = \mu\gamma_f$ is computed and this value is requantized using the same quantization table. This results in $\gamma_{fnew}$ and a new bit combination for the parameter which is exchanged against the old bit combination of $\gamma_f$ resulting in the bit stream $b_2$ (n) .

In some codecs or codec modes of the GSM-AMR $\gamma_f$ is vector quantized together with $\gamma_a$ in a 2-dim vector quantizer. In these cases a new codevector ($\gamma_f$, $\gamma_a$) and corresponding bit combination has to be found so that $\gamma_a$ remains approximately unchanged but $\gamma_f$ is approximately attenuated by $\mu$. Hence the most important goal of muting the signal as and when necessary is always achieved.

Further parameters like the LPC-coefficients, being reflection coefficients or LSP-coefficients can be used for analysis of the signals and they can be changed appropriately in echo cancellation and noise reduction algorithms without the need of a full speech encoding process. In newer CELP codecs the complexity of requantizing e.g. LSP-coefficients is though being considerable high still only a 1/3 or ¼ of the full encoder complexity.

Further improvement in these schemes shall be achieved by using the Channel state information that is also embedded in the bitstreams of Figure 1. This shall be done to improve the adaptation in the known echo cancellation or noise reduction algorithms.

It is to be noted that it is a particular improvement of the present invention to provide a network unit 1 which requires only relatively modest processing resources as no encoding is required. Further no RAM and ROM or other kinds of additional functionalities are necessary for the speech encoders.

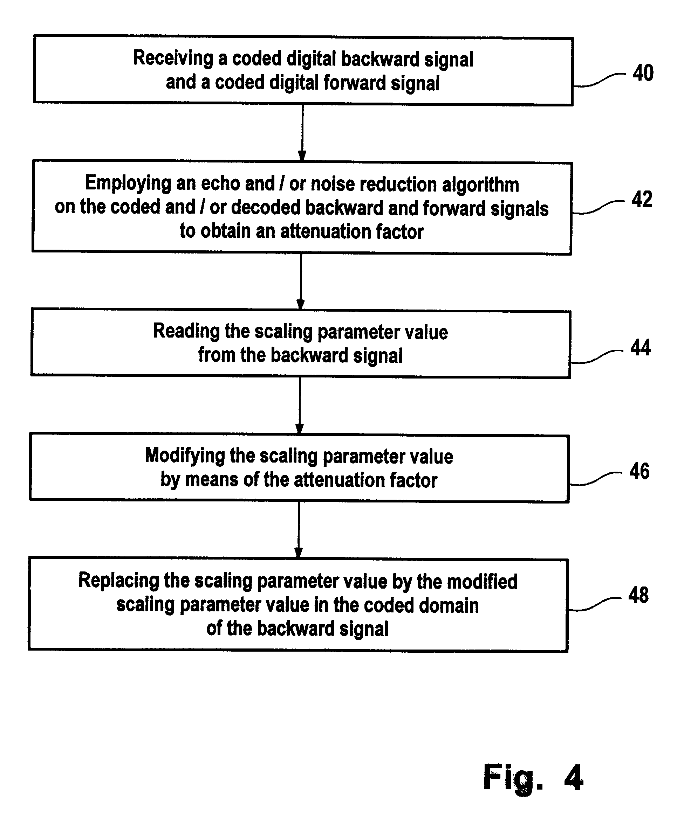

Figure 4 shows a preferred embodiment of a method in accordance with the invention. In step 40 a coded digital backward signal and a coded digital forward signal is received by a network unit. The coded digital backward signal has a noise component and / or a feedback component of the forward signal.

In step 42 an echo and / or noise reduction algorithm is employed on the coded and / or the decoded backward and forward signals to obtain an attenuation factor for the backward signal. In step 44 the value of the scaling parameter of the backward signal is read for the actual frame. The scaling parameter forms part of the speech synthesis model used for encoding.

In step 46 the scaling parameter value is modified by means of the attenuation factor determined in step 42 for example the value of the scaling parameter is multiplied by the attenuation factor.

In step 48 the original scaling parameter value is replaced by the modified scaling parameter value in the coded domain of the backward signal.

Additionally this operation involves almost no delay if the adaptation of the EC or NR algorithm is carried out based on previous frames.

It has also to be pointed out, that no quality degradation occurs by a transcoding function which would otherwise occur inevitable. With the described invention EC+NR becomes possible even in TFO and TrFO transmissions without sacrificing the quality gain achieved by these protocols.

list of reference numerals

| | |
|---|---|
| network unit | 1 |
| input | 2 |
| output | 3 |
| input | 4 |
| output | 5 |
| data transmission channel | 6 |
| encoder (for forward) | 7 |
| microphone (forward) | 8 |
| recoder | 9 |
| channel | 10 |
| decoder (for forward) | 11 |
| speaker (forward) | 12 |
| mobile phone | 13 |
| mobile phone | 14 |
| microphone (backward) | 15 |
| encoder (for backward) | 16 |
| data transmission channel | 17 |

| recoder | 18 |
| data transmission channel | 19 |
| decoder (for backward) | 20 |
| speaker (backward) | 21 |
| acoustic feedback path | 22 |
| acoustic noise | 23 |
| module | 24 |
| input | 25 |
| input | 26 |
| input | 27 |
| input | 28 |
| decoder (for forward) | 29 |
| decoder (for backward) | 30 |
| codebook | 31 |
| synthesis cascade | 32 |
| adaptive codebook | 33 |
| stochastic codebook | 34 |
| step | 40 |
| step | 42 |
| step | 44 |
| step | 46 |
| step | 48 |

**Claims**

1. A method for modifying a digital signal being represented by a set of parameter values of a speech and/or audio synthesis model
   **characterized by**
   modifying the digital signal in the coded domain by modifying at least one of the parameter values in a way to replicate a wanted operation in the original domain.

2. The method of claim 1 the modification being echo and / or noise reduction of the coded digital signal.

3. The method of claim 2 further comprising detecting a portion of the coded digital signal having echo and / or noise and modifying at least one of the parameter values of the portion of the signal to reduce echo and / or noise.

4. The method of claim 1, 2 or 3, the coded digital signal being a backward signal comprising a noise component and / or an echo component of a corresponding forward signal as a result of a feedback loop formed at the receiver side of the forward signal.

5. The method of claim 4 further comprising decoding the forward and the backward signals.

6. The method of claim 4 or 5 further comprising using a method for echo and / or noise reduction to provide an attenuation factor for the coded digital signal and attenuating the coded digital signal by modifying at least one of the parameter values.

7. The method of claim 4, 5 or 6 whereby the decoded forward and backward signals and /or the coded forward and backward signals are used for the method of echo and / or noise reduction to provide one or more modification parameters, such as an attenuation factor and/or filter modification parameters, for corresponding modifiction of the at least one of the parameter values.

8. The method of anyone of the preceding claims 1 to 7 whereby the speech synthesis model comprising a scaling parameter and whereby the coded digital signal is attenuated by decreasing the value of the scaling parameter.

9. The method of anyone of the preceding claims whereby the speech synthesis model provides for LPC parameter values which are used for modifying, such as attenuating, the coded digital signal to reduce echo and / or noise.

**10.** The method of anyone of the preceding claims 1 to 9 the speech synthesis model being a code excited linear prediction type model providing for a scaling parameter value $\gamma_f$.

**11.** A network unit, such as a mobile switching center (MSC), comprising means for performing a method in accordance with anyone of the preceding claims 1 to 10.

**12.** A gateway, such as an internet access device or a trunk gateway or a digital subscriber line access multiplexer (DSLAM), comprising means for performing a method in accordance with anyone of the preceding claims 1 to 10.

**13.** A computer program product comprising means for performing a method for anyone of the preceding claims 1 to 10.

Fig. 1

Codebook

31

$K_s$

L

$\overline{c}_j$

$\gamma_f$

$c(n)$

$+$

$e(n)$

$\dfrac{1}{A(z)}$

$P(z)$

$\hat{s}(n)$

$\gamma_a$

$Z^{-M_P}$

32

**Fig. 2**

Fig. 3

```
┌─────────────────────────────────────────────────┐
│        Receiving a coded digital backward signal  │──── 40
│          and a coded digital forward signal        │
└─────────────────────────────────────────────────┘
                        │
                        ▼
┌─────────────────────────────────────────────────┐
│   Employing an echo and / or noise reduction algorithm │──── 42
│ on the coded and / or decoded backward and forward signals │
│          to obtain an attenuation factor           │
└─────────────────────────────────────────────────┘
                        │
                        ▼
┌─────────────────────────────────────────────────┐
│          Reading the scaling parameter value      │──── 44
│             from the backward signal               │
└─────────────────────────────────────────────────┘
                        │
                        ▼
┌─────────────────────────────────────────────────┐
│         Modifying the scaling parameter value     │──── 46
│           by means of the attenuation factor       │
└─────────────────────────────────────────────────┘
                        │
                        ▼
┌─────────────────────────────────────────────────┐
│  Replacing the scaling parameter value by the modified │──── 48
│      scaling parameter value in the coded domain   │
│                of the backward signal              │
└─────────────────────────────────────────────────┘
```

# Fig. 4

# EP 1 301 018 A1

## European Patent Office

## EUROPEAN SEARCH REPORT

**Application Number**

EP 01 44 0332

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 109 154 A (NORTEL NETWORKS LTD) 20 June 2001 (2001-06-20) * page 2, line 10 - line 50 * * page 6, line 51 - page 8, line 25 * | 1-13 | H04M9/08 H04B3/23 |
| X | DE 198 36 995 A (MOTOROLA INC) 18 March 1999 (1999-03-18) * page 5, line 4 - line 36 * * claims 5,8 * | 1-10 | |
| X | WO 01 02929 A (CHANDRAN RAVI ;MARCHOK DANIEL J (US); TELLABS OPERATIONS INC (US)) 11 January 2001 (2001-01-11) * abstract * | 1 | |
| A | WO 01 22612 A (NOKIA NETWORKS OY ;EIKKULA JARI (FI)) 29 March 2001 (2001-03-29) * page 1, line 25 - line 34 * | 11,12 | |
| A | EP 0 303 101 A (SIEMENS AG) 15 February 1989 (1989-02-15) * column 1, line 28 - line 40 * | 12 | TECHNICAL FIELDS SEARCHED (Int.Cl.7) |
| A | EP 1 117 191 A (ERICSSON TELEFON AB L M) 18 July 2001 (2001-07-18) * abstract * | 13 | H04B H04M |

The present search report has been drawn up for all claims

| Place of search | Date of completion of the search | Examiner |
|---|---|---|
| THE HAGUE | 24 June 2002 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 44 0332

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2002

| Patent document cited in search report | | Publication date | Patent family member(s) | | Publication date |
|---|---|---|---|---|---|
| EP 1109154 | A | 20-06-2001 | EP | 1109154 A2 | 20-06-2001 |
| DE 19836995 | A | 18-03-1999 | CN | 1212555 A | 31-03-1999 |
| | | | DE | 19836995 A1 | 18-03-1999 |
| | | | FR | 2767941 A1 | 05-03-1999 |
| | | | GB | 2329097 A ,B | 10-03-1999 |
| | | | JP | 11154894 A | 08-06-1999 |
| WO 0102929 | A | 11-01-2001 | AU | 6063600 A | 22-01-2001 |
| | | | AU | 6067100 A | 22-01-2001 |
| | | | AU | 6203300 A | 22-01-2001 |
| | | | EP | 1208413 A2 | 29-05-2002 |
| | | | EP | 1190494 A1 | 27-03-2002 |
| | | | EP | 1190495 A1 | 27-03-2002 |
| | | | WO | 0103316 A1 | 11-01-2001 |
| | | | WO | 0102929 A2 | 11-01-2001 |
| | | | WO | 0103317 A1 | 11-01-2001 |
| WO 0122612 | A | 29-03-2001 | FI | 992054 A | 24-03-2001 |
| | | | AU | 7294100 A | 24-04-2001 |
| | | | EP | 1214799 A1 | 19-06-2002 |
| | | | WO | 0122612 A1 | 29-03-2001 |
| EP 0303101 | A | 15-02-1989 | AT | 81239 T | 15-10-1992 |
| | | | AU | 586959 B2 | 27-07-1989 |
| | | | AU | 2011088 A | 16-02-1989 |
| | | | DE | 3875028 D1 | 05-11-1992 |
| | | | EP | 0303101 A1 | 15-02-1989 |
| | | | ES | 2035186 T3 | 16-04-1993 |
| | | | GR | 3006697 T3 | 30-06-1993 |
| | | | JP | 1044636 A | 17-02-1989 |
| | | | JP | 1963697 C | 25-08-1995 |
| | | | JP | 6095653 B | 24-11-1994 |
| | | | NO | 175400 B | 27-06-1994 |
| EP 1117191 | A | 18-07-2001 | EP | 1117191 A1 | 18-07-2001 |
| | | | AU | 2897001 A | 24-07-2001 |
| | | | WO | 0152438 A1 | 19-07-2001 |

EPO FORM P0459

For more details about this annex : see Official Journal of the European Patent Office, No. 12/82